# EUROPEAN PATENT SPECIFICATION

(11) **EP 2 701 419 B1**
(45) Date of publication and mention of the grant of the patent: **01.07.2015**
(21) Application number: 11768467.0
(22) Date of filing: 17.05.2011
(51) Int. Cl.: H04W 16/18, H04W 72/08

(54) **METHOD, DEVICE AND BASE STATION FOR RESOURCES DISTRIBUTION**
VERFAHREN, VORRICHTUNG UND BASISSTATION FÜR RESSOURCENVERTEILUNG
PROCÉDÉ, DISPOSITIF ET STATION DE BASE POUR LA RÉPARTITION DE RESSOURCES

(43) Date of publication of application: 26.02.2014
(73) Proprietor: Huawei Technologies Co., Ltd., Longgang District Shenzhen, Guangdong 518129 (CN)
(72) Inventor: YANG, Feng, Shenzhen Guangdong 518129 (CN)
(74) Representative: Thun, Clemens
(86) International application number: PCT/CN2011/074190
(87) International publication number: WO 2011/127856

(56) References cited:
- EP-A2- 2 211 584
- WO-A1-2010/050612
- CN-A- 101 784 116
- US-A1- 2011 003 598
- US-A1- 2011 045 831

## Description

### TECHNICAL FIELD

Embodiments of the present invention relate to the field of communications technologies, and in particular, to a method, an apparatus, and a base station for resource allocation.

### BACKGROUND

Currently, the fourth-generation mobile communications standard LTE (Long term evolution, long term evolution) promoted by the 3GPP wins support of most operators worldwide because of its excellent features such as a high peak rate, high spectral efficiency, and a low delay. The LTE uses OFDMA (Orthogonal Frequency Division Multiple Access, orthogonal frequency division multiple access) as its multiple-access mode to obtain very high spectral efficiency. However, on an LTE intra-frequency network, inter-cell interference becomes a main factor that affects performance of the LTE. To control the inter-cell interference, an ICIC (inter-cell interference coordination, inter-cell interference coordination) technology is used in an LTE system to manage the inter-cell interference. In the ICIC, orthogonality of time domain resources or frequency domain resources is performed for a cell edge user in each cell, where interference of the cell edge user with a neighboring cell is relatively strong, thereby achieving a purpose of avoiding the interference and improving performance of the cell edge user.

US 20110045831 A1 discloses a user grouping method for inter-cell interference coordination technology in mobile telecommunication systems using the handover information and measured data that were defined in existing mobile telecommunication systems to group cell users into cell center users and cell edge users. This method includes: (1) user equipment measuring the average signal strength of the serving cell and neighboring cells; (2) user equipment determining if it should reply with the average signal strength information it measures and if it should initiate the inter-cell interference coordination measuring and response system; (3) serving cell then groups the user equipment as cell center user or cell edge user according to the average signal strength information reported by the user equipment; (4) serving cell allocates a frequency subchannel from cell center subband or cell edge subband according to the grouping result.

US 20110003598 A1 discloses a method of operating a base station in a wireless system, including partitioning a frequency band into at least one band of a first type and at least one band of a second type, and coordinating the partitioning with at least one further base station. The at least one band of the first type includes a band on which the base station transmits power proportional to a distance of a user device from the base station, and the at least one band of the second type comprises a band on which base station transmits a data rate inversely proportional to a distance of a user device from the base station.

In an existing uplink ICIC technology, a soft frequency reuse (soft frequency reuse, referred to as SFR) technology is mainly used. However, poor coverage performance of a cell is caused by using an existing SFR-based resource allocation method.

### SUMMARY

Embodiments of the present invention provide a method, an apparatus, and a base station for resource allocation so as to improve coverage performance of a cell.

An embodiment of the present invention provides a method for resource allocation, including:
receiving, by a network side device, a measurement report sent by a UE;
acquiring, by the network side device, RSRP1 and RSRP2 from the measurement report, where the RSRP1 is RSRP from the UE to a serving cell and the RSRP2 is RSRP from the UE to a neighboring cell;
determining, by the network side device according to an absolute value of the RSRP1, an absolute value of the RSRP2, and a difference between values of the RSRP1 and the RSRP2, a frequency band that is suitable to be used by the UE, where the frequency band includes: a central frequency band and an edge frequency band; and
allocating, by the network side device according to a result of the determining, a resource for the UE on the frequency band that accords with the result of the determining;
wherein the determining, by the network side device according to an absolute value of the RSRP1, an absolute value of the RSRP2, and a difference between values of the RSRP1 and the RSRP2, a frequency band that is suitable to be used by the UE comprises one or any combination of the following cases:
   if | RSRP1 - RSRP2 | ≤ T3, RSRP1 > T1, and RSRP2 < T2, determining that a user attribute of the UE is a cell edge user and the frequency band that is suitable to be used by the UE is an edge frequency band, wherein T1 is a first preset threshold, T2 is a second preset threshold, and T3 is a third preset threshold;
   if | RSRP1 -RSRP2 |> T3, RSRP1 > T1, and RSRP2 < T2, determining that a user attribute of the UE is a cell center user and the frequency band that is suitable to be used by the UE is a central frequency band, wherein the central frequency band comprises a first sub frequency band and a second sub frequency band;
   if RSRP1 ≤ T1, determining that a user attribute of the UE is a poor performance user and the frequency band that is suitable to be used by the UE is an edge frequency band; and
   if RSRP2 ≥ T2, determining that a user attribute of the UE is an interference causing user and the frequency band that is suitable to be used by the UE is a strong-interference frequency band of the UE, wherein if an edge frequency band of a neighboring cell of the UE is the first sub frequency band of the central frequency band, the second sub frequency band is a strong-interference frequency band of the UE, and if an edge frequency band of a neighboring cell of the UE is the second sub frequency band of the central frequency band, the first sub frequency band is a strong-interference frequency band of the UE.

An embodiment of the present invention provides an apparatus for resource allocation, including:
a receiving module, configured to receive a measurement report sent by a UE;
an acquiring module, configured to acquire RSRP1 and RSRP2 from the measurement report received by the receiving module, where the RSRP1 is RSRP from the UE to a serving cell and the RSRP2 is RSRP from the UE to a neighboring cell;
a determining module, configured to determine, according to an absolute value of the RSRP1, an absolute value of the RSRP2, and a difference between values of the RSRP1 and the RSRP2, a frequency band that is suitable to be used by the UE, where the absolute value of the RSRP1, the absolute value of the RSRP2, and the difference between the values of the RSRP1 and the RSRP2 are acquired by the acquiring module, and the frequency band includes: a central frequency band and an edge frequency band; and
a first allocating module, configured to allocate, according to a result determined by the determining module, a resource for the UE on the frequency band that accords with the result of the determining;
wherein the determining module comprises any one or more of the following units:
   a first determining unit, configured to, if | RSRP1 - RSRP2 | ≤ T3, RSRP 1 > T1, and RSRP2 < T2, determine that a user attribute of the UE is a cell edge user and the frequency band that is suitable to be used by the UE is an edge frequency band, wherein T1 is a first preset threshold, T2 is a second preset threshold, and T3 is a third preset threshold;
   a second determining unit, configured to, if | RSRP1 - RSRP2 | > T3, RSRP1 > T1, and RSRP2 < T2, determine that a user attribute of the UE is a cell center user and the frequency band that is suitable to be used by the UE is a central frequency band, wherein the central frequency band comprises a first sub frequency band and a second sub frequency band;
   a third determining unit, configured to, if RSRP1 ≤ T1, determine that a user attribute of the UE is a poor performance user and the frequency band that is suitable to be used by the UE is an edge frequency band; and
   a fourth determining unit, configured to, if RSRP2 ≥ T2, determine that a user attribute of the UE is an interference causing user and the frequency band that is suitable to be used by the UE is a strong-interference frequency band of the UE, wherein if an edge frequency band of a neighboring cell of the UE is the first sub frequency band of the central frequency band, the second sub frequency band is a strong-interference frequency band of the UE, and if an edge frequency band of a neighboring cell of the UE is the second sub frequency band of the central frequency band, the first sub frequency band is a strong-interference frequency band of the UE.

An embodiment of the present invention provides a base station, including any one of apparatuses for resource allocation provided in the embodiments of the present invention.

With the method, the apparatus, and the base station for resource allocation in the embodiments of the present invention, a network side device determines, according to an absolute value of RSRP1, an absolute value of RSRP2, and a difference between values of the RSRP1 and the RSRP2, a frequency band that is suitable to be used by a UE, and allocates, according to a result of the determining, a resource for the UE on the frequency band that accords with the result of the determining. In the embodiments of the present invention, the network side device determines, not only according to the difference between the values of the RSRP1 and the RSRP2 but also according to the absolute value of the RSRP1 and the absolute value of the RSRP2, the frequency band that is suitable to be used by the UE, and allocates the resource for the UE on the suitable frequency band, so that coverage performance of a cell can be improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a method for resource allocation according to an embodiment of the present invention;
FIG. 2 is a flowchart of a method for resource allocation according to another embodiment of the present invention;
FIG. 3 is a schematic diagram of classification of user attributes in the embodiment shown in FIG. 2;
FIG. 4 is a schematic diagram of division of a frequency band in the embodiment shown in FIG. 2;
FIG. 5A and FIG. 5B are a flowchart of a method for resource allocation according to still another embodiment of the present invention;
FIG. 6 is a schematic diagram of an apparatus for resource allocation according to an embodiment of the present invention; and
FIG. 7 is a schematic diagram of an apparatus for resource allocation according to another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

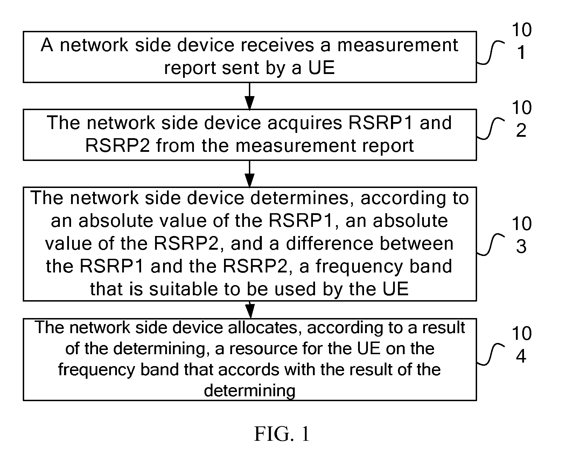

FIG. 1 is a flowchart of a method for resource allocation according to an embodiment of the present invention. As shown in FIG. 1, the method includes:

Step 101: A network side device receives a measurement report sent by a user equipment (User Equipment, hereinafter referred to as UE).

Each embodiment of the present invention may apply to an LTE system. For example, the network side device in this embodiment may be a base station.

After the base station starts, the base station configures an A3 measurement event for a UE that accesses the base station. When the UE meets a condition for reporting the A3 measurement event, the UE reports a measurement result to the base station through a measurement report.

Step 102: The network side device acquires RSRP1 and RSRP2 from the measurement report, where the RSRP1 is RSRP from the UE to a serving cell, the RSRP2 is RSRP from the UE to a neighboring cell, and the RSRP (full name: Reference signal received power) is reference signal received power.

The network side device, for example, the base station, may acquire the RSRP1 and the RSRP2 from the received measurement report reported by the UE. Specifically, the RSRP2 may be RSRP from the UE to a strongest neighboring cell, where the strongest neighboring cell is a cell that is adjacent to the serving cell and whose RSRP value is the largest. It may be acquired, according to an RSRP value from the UE to each neighboring cell, which neighboring cell is the strongest neighboring cell. The RSRP from the UE to the strongest neighboring cell is greater than RSRP from the UE to another neighboring cell.

Step 103: The network side device determines, according to an absolute value of the RSRP1, an absolute value of the RSRP2, and a difference between values of the RSRP1 and the RSRP2, a frequency band that is suitable to be used by the UE, where the frequency band includes: a central frequency band and an edge frequency band.

The network side device, for example, the base station, may use an SFR technology. The soft frequency reuse (soft frequency reuse, referred to as SFR) technology is to divide a whole frequency band into a central frequency band and an edge frequency band. Specifically, a whole frequency band of the serving cell may be divided into three sub frequency bands, where one sub frequency band is an edge frequency band and the other two sub frequency bands are central frequency bands. One sub frequency band of a central frequency band of the serving cell is an edge frequency band of a neighboring cell. An edge frequency band mode between neighboring cells may be configured through network planning or an automatic configuration tool, so that no conflict between edge frequency bands of the neighboring cells occurs. It is suitable for some UEs to use edge frequency bands while it is suitable for some UEs to use central frequency bands, so as to improve coverage performance of a cell. For example, the base station identifies users in a cell as a cell edge user (Cell edge user, referred as to CEU) and a cell center user (Cell center user, referred to as CCU). When allocating a resource, an eNB preferentially allocates a resource on an edge frequency band for the CEU and preferentially allocates a resource on a central frequency band for the CCU, thereby achieving a purpose that strong interference of a neighboring cell with the CEU is avoided and performance of the CEU is improved.

In this embodiment, the base station may determine, according to an absolute value of RSRP1 and an absolute value of RSRP2 of a certain UE and a difference between values of the RSRP1 and the RSRP2, which frequency band is suitable to be used by the UE, that is, determine which frequency band is suitable to be allocated for the UE. In the prior art, UEs are classified as a cell edge user and a cell center user only according to the difference between the values of the RSRP1 and the RSRP2, then an edge frequency band is allocated for the cell edge user, and a central frequency band is allocated for the cell center user. However, in this embodiment, when it is determined which frequency band is suitable to be allocated for the UE, in addition to the difference between the values of the RSRP1 and the RSRP2, the absolute value of the RSRP1 and the absolute value of the RSRP2 are also considered. For example, for a certain UE, when | RSRP1 - RSRP2 | ≤ T3, RSRP1 > T1, and RSRP2 < T2, it is determined that an edge frequency band is suitable to be used by the UE; and for a certain UE, when | RSRP1 - RSRP2 | > T3, RSRP1 > T1, and RSRP2 < T2, it is determined that a central frequency band is suitable to be used by the UE, where T1, T2, and T3 are three preset thresholds.

Step 104: The network side device allocates, according to a result of the determining, a resource for the UE on the frequency band that accords with the result of the determining.

After determining the frequency band that is suitable to be used by the UE, the network side device, for example, the base station, allocates a resource for the UE on the frequency band that is suitable to be used by the UE.

In this embodiment of the present invention, a network side device determines, not only according to a difference between values of RSRP1 and RSRP2, but also according to an absolute value of the RSRP1 and an absolute value of the RSRP2, a frequency band that is suitable to be used by a UE, and allocates a resource for the UE on the suitable frequency band, so that coverage performance of a cell can be improved.

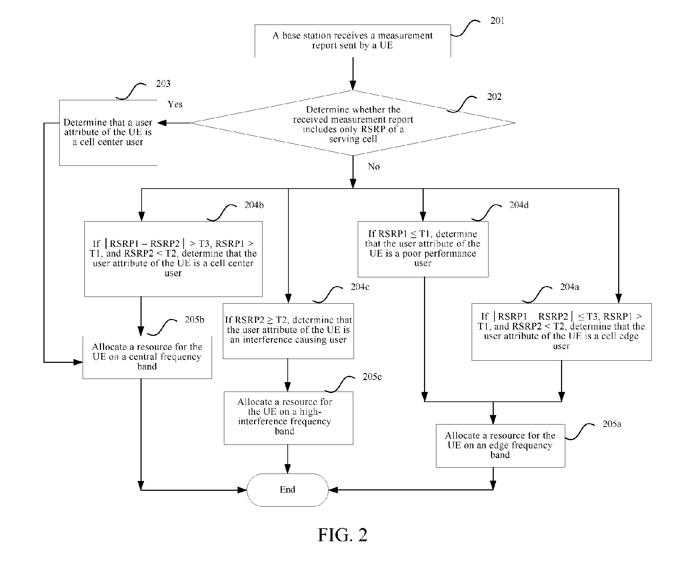

FIG. 2 is a flowchart of a method for resource allocation according to another embodiment of the present invention. As shown in FIG. 2, the method includes:

Step 201: A base station receives a measurement report sent by a UE.

After the base station starts, the base station configures an A3 measurement event for a UE that accesses the base station. When the UE meets a condition for reporting the A3 measurement event, the UE reports a measurement result to the base station through a measurement report.

Step 202: The base station determines whether the received measurement report includes only RSRP of a serving cell. If yes, perform step 203; and if no, perform step 204.

Specifically, after the base station receives the A3 measurement report reported by the UE, if it is determined that the A3 measurement report includes only the RSRP of the serving cell, step 203 is performed; and if it is determined that the A3 measurement report includes the RSRP of the serving cell and RSRP of a neighboring cell, step 204 is performed.

Step 203: The base station determines that a user attribute of the UE is a cell center user, and then performs step 205b.

Step 204: The base station determines a user attribute of the UE according to an absolute value of RSRP1, an absolute value of RSRP2, and a difference between values of the RSRP1 and the RSRP2 and determines, according to the user attribute of the UE, a frequency band that is suitable to be used. Specifically, step 204 may include any one or more of the following: step 204a, step 204b, step 204c, and step 204d.

Step 204a: If | RSRP1 - RSRP2 | ≤ T3, RSRP1 > T1, and RSRP2 < T2, determine that the user attribute of the UE is a cell edge user and the frequency band that is suitable to be used by the UE is an edge frequency band.

Step 204b: If | RSRP1 - RSRP2 | > T3, RSRP1 > T1, and RSRP2 < T2, determine that the user attribute of the UE is a cell center user and the frequency band that is suitable to be used by the UE is a central frequency band, where the central frequency band includes a first sub frequency band and a second sub frequency band.

Step 204c: If RSRP2 ≥ T2, determine that the user attribute of the UE is an interference causing user and the frequency band that is suitable to be used by the UE is a strong-interference frequency band.

Step 204d: If RSRP1 ≤ T1, determine that the user attribute of the UE is a poor performance user and the frequency band that is suitable to be used by the UE is an edge frequency band.

T1 is a first preset threshold, T2 is a second preset threshold, and T3 is a third preset threshold. T1 is less than T2, T1 is used to measure performance of the UE, and T2 is used to measure interference of the UE.

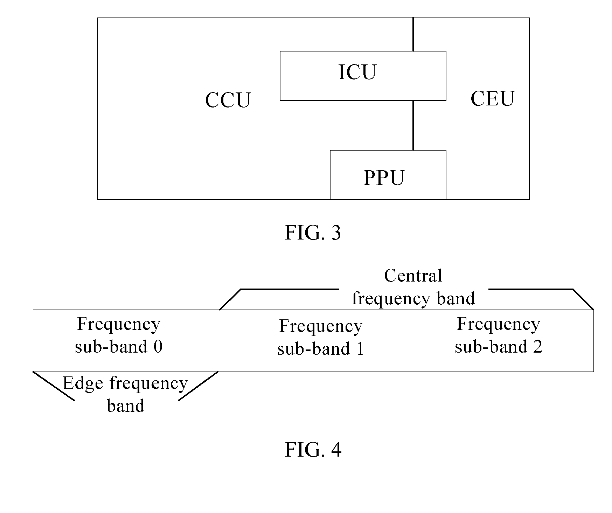

It should be noted that the cell edge user and the cell center user described in this embodiment refer to UEs that meet the conditions described in step 204a and step 204b respectively, and they are different from a cell edge user and a cell center user that are obtained only according to a difference of RSRPs in the prior art. In addition, in steps 204a, 204b, 204c, and 204d, the user attribute is classified as a cell edge user, a cell center user, an interference causing user, and a poor performance user. However, in a specific implementation manner, the user attribute may be classified as one or several types among the cell edge user, the cell center user, the interference causing user, and the poor performance user, that is, one or several steps in steps 204a, 204b, 204c, and 204d are performed; or the user attribute may be classified as four types: the cell edge user, the cell center user, the interference causing user, and the poor performance user, that is, user attributes of all UEs are classified as the foregoing four types. As shown in FIG. 3, FIG. 3 is a schematic diagram of classification of user attributes in the embodiment shown in FIG. 2. As shown in FIG. 3, user attributes of UEs are classified as four types: a cell edge user (CEU), a cell center user (CCU), an interference causing user (Interference causing user, referred to as ICU), and a poor performance user (Poor performance user, referred to as PPU).

It should be noted that a specific process that a base station determines a user attribute of a UE is not limited in this embodiment when the base station determines the user attribute of the UE according to the conditions described in steps 204a, 204b, 204c, and 204d. For example, the base station may first determine, by comparing | RSRP1 - RSRP2 | with T3, whether the UE is a CEU or a CCU, and then determine, by comparing the RSRP1 with T1, whether the UE is a PPU; if the UE is a PPU, change the user attribute of the UE; if the UE is not a PPU, determine, by comparing the RSRP2 with T2, whether the UE is an ICU; and if the UE is an ICU, change the user attribute of the UE. For another example, the base station may first determine, by comparing the RSRP1 with T1 or by comparing the RSRP2 with T2, whether the UE is a PPU or an ICU; and then, if the UE is not a PPU or an ICU, determine, by comparing | RSRP1 - RSRP2 | with T3, whether the UE is a CEU or a CCU.

The following describes the strong-interference frequency band in step 204c. FIG. 4 is a schematic diagram of division of a frequency band described in the embodiment shown in FIG. 2. As shown in FIG. 4, a frequency band of a serving cell is divided into an edge frequency band (a sub frequency band 0) and a central frequency band, where the central frequency band includes a first sub frequency band (a sub frequency band 1) and a second sub frequency band (a sub frequency band 2). A base station may acquire an edge frequency band of a strongest neighboring cell of a certain UE. If the edge frequency band of the strongest neighboring cell of the UE is the first sub frequency band of the central frequency band, the second sub frequency band is a strong-interference frequency band of the UE. If the edge frequency band of the strongest neighboring cell of the UE is the second sub frequency band of the central frequency band, the first sub frequency band is a strong-interference frequency band of the UE. That is, when the edge frequency band of the strongest neighboring cell is one sub frequency band of a central frequency band of a serving cell, the other sub frequency band of the central frequency band of the serving cell is taken as a strong-interference frequency band of the UE. A strong-interference frequency band is a central frequency band of a UE, where the central frequency band is not an edge frequency band of a strongest neighboring cell of the UE. The strong-interference frequency band is at a user level.

Step 205: The base station allocates a resource for the UE on the frequency band that is suitable to be used by the UE.

Specifically, step 205 may include step 205a, step 205b, and step 205c.

Step 205a: If the user attribute of the UE is a cell edge user or a poor performance user, allocate a resource for the UE on an edge frequency band, and end the procedure, that is, perform step 205a after step 204a or step 204d. Step 205b: If the user attribute of the UE is a cell center user, allocate a resource for the UE on a central frequency band, and end the procedure, that is, perform step 205b after step 204b. Step 205c: If the user attribute of the UE is an interference causing user, allocate a resource for the UE on a strong-interference frequency band, and end the procedure, that is, perform step 205c after step 204c. In this way, resource allocation, in one aspect, is to avoid strong interference caused by an interference causing user to a cell edge UE of a neighboring cell, and in another aspect, is to reserve as many resources on an edge frequency band as possible for a cell edge user or a poor performance user.

In the prior art, a UE is classified as a CEU or a CCU only according to a difference ofRSRPs. In the prior art, in some cases, for a UE that is determined as a CCU, because pass loss from the UE to a neighboring cell is relatively small, interference with the neighboring cell may be relatively large; in other cases, for a UE that is determined as a CCU, because the UE suffers shadow or deep fading and performance of the UE is relatively poor, if the UE is allocated a central frequency band of which an interference level is relatively high, the performance of the UE may become poorer. In this embodiment of the present invention, the UE may be classified as a CEU or a CCU; in addition, the UE may further be classified according to path loss from the UE to a neighboring cell and performance of the UE, and a resource is reallocated for the UE according to the classification of the UE. Therefore, the problem in the prior art is solved.

It should be noted that each threshold in this embodiment of the present invention may be pre-configured by the base station. A specific configuration rule may be considered comprehensively according to factors such as network planning, the total number of users in a cell, and a system bandwidth.

In this embodiment of the present invention, a base station may classify a user attribute based on a difference between values of RSRP1 and RSRP2 and values of the RSRP1 and the RSRP2; the base station may divide a frequency band in a serving cell into a central frequency band and an edge frequency band, and may further divide a strong-interference frequency band from the central frequency band; moreover, the base station selects, according to a user attribute of a UE, a suitable frequency band from the central frequency band, the edge frequency band, and the strong-interference frequency band to allocate a resource for the UE, that is, the base station adaptively allocates a resource for the UE according to a newly classified user attribute, so that coverage performance of a cell can be improved.

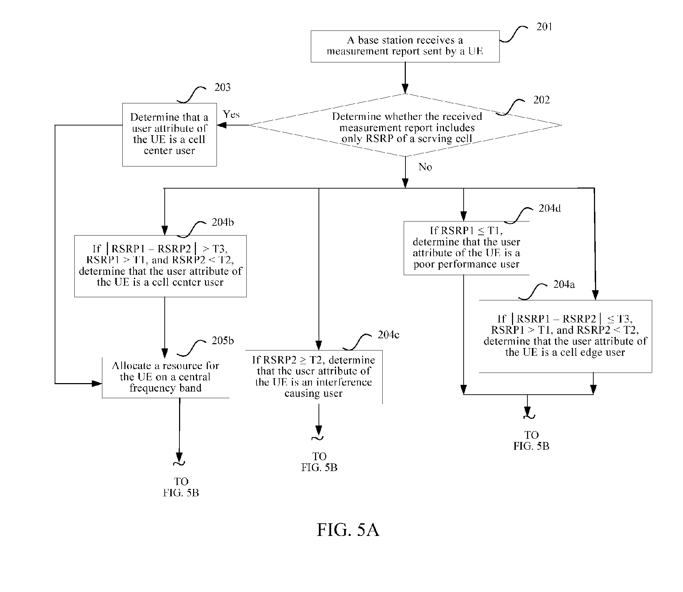

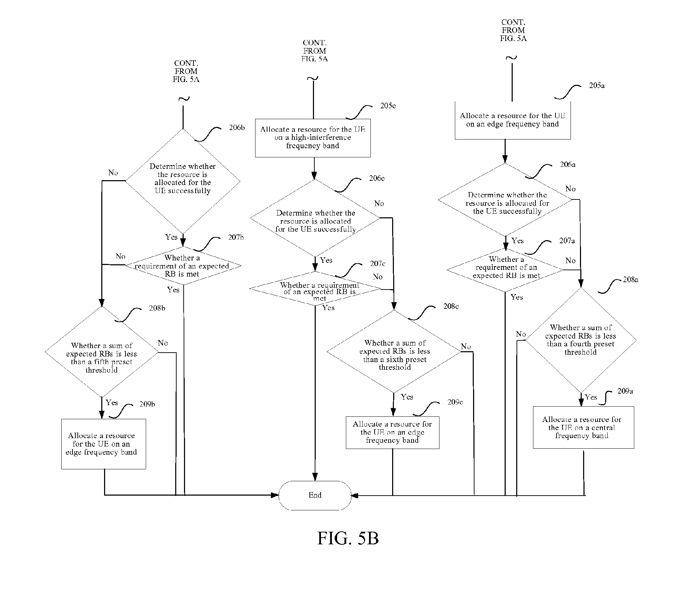

FIG. 5A and FIG. 5B are a flowchart of a method for resource allocation according to still another embodiment of the present invention. As shown in FIG. 5A and FIG. 5B, on the basis of the embodiment shown in FIG. 4, the method may further include the following steps:

After step 205a, step 206a is performed. Step 206a: The base station determines whether the resource is allocated for the UE successfully. If yes, perform step 207a; and if no, perform step 208a.

Step 207a: The base station determines whether an RB (resource block, resource block) allocated for the UE meets a requirement of an expected RB. If yes, end the procedure; and if no, perform step 208a.

Step 208a: The base station determines and predicts whether a sum of expected RBs of a CCU among M1 users to be scheduled at a current TTI (Transmission Time Interval, transmission time interval) is less than a fourth preset threshold. If yes, perform step 209a; and if no, end the procedure.

Step 209a: The base station allocates a resource on a central frequency band for a UE whose user attribute is determined as a CEU or a PPU, and then the procedure ends.

In another implementation manner, step 208a may not be included. If the resource fails to be allocated for the UE in step 206a, step 209a is directly performed; and if the RB allocated for the UE does not meet the expected RB in step 207a, step 209a is directly performed. That is to say, for a UE whose user attribute is a CEU or a PPU, if a resource fails to be allocated for the UE on an edge frequency band or an RB allocated for the UE by the base station does not meet an expected RB, violation scheduling may be allowed by default, that is, the resource is allocated on a central frequency band for the UE whose user attribute is a CEU or a PPU.

After step 205b, step 206b is performed. Step 206b: The base station determines whether the resource is allocated for the UE successfully. If yes, perform step 207b; and if no, perform step 208b.

Step 207b: The base station determines whether an RB allocated for the UE meets a requirement of an expected RB. If yes, end the procedure; and if no, perform step 208b.

Step 208b: The base station determines and predicts whether a sum of expected RBs of a non-CCU among M2 users to be scheduled at a current TTI is less than a fifth preset threshold. If yes, perform step 209b; and if no, end the procedure.

Step 209b: The base station allocates a resource on an edge frequency band for a UE whose user attribute is a CCU, and then, the procedure ends.

In another implementation manner, step 208b may not be included. If the resource fails to be allocated for the UE in step 206b, step 209b is directly performed; and if the RB allocated for the UE does not meet the expected RB in step 207b, step 209b is directly performed. That is to say, for a UE whose user attribute is a CCU, if a resource fails to be allocated for the UE on a central frequency band or an RB allocated for the UE by the base station does not meet an expected RB, violation scheduling may be allowed by default, that is, the resource is allocated on an edge frequency band for the UE whose user attribute is a CCU.

After step 205c, step 206c is performed.

Step 206c: The base station determines whether the resource is allocated for the UE successfully. If yes, perform step 207c; and if no, perform step 208c.

Step 207c: The base station determines whether an RB allocated for the UE meets a requirement of an expected RB. If yes, end the procedure; and if no, perform step 208c.

Step 208c: The base station determines whether a sum of expected RBs of a non-CCU user among M3 users to be scheduled at a current TTI is less than a sixth preset threshold. If yes, perform step 209c; and if no, end the procedure.

Step 209c: The base station allocates a resource on an edge frequency band for a UE whose user attribute is determined as an ICU, and then, the procedure ends.

In another implementation manner, step 208c may not be included. If the resource fails to be allocated for the UE in step 206c, step 209c is directly performed; and if the RB allocated for the UE does not meet the expected RB in step 207c, step 209c is directly performed. That is to say, for a UE whose user attribute is an ICU, if a resource fails to be allocated for the UE on a strong-interference frequency band or an RB allocated for the UE by the base station does not meet an expected RB, violation scheduling may be allowed by default, that is, the resource is allocated on an edge frequency band for the UE whose user attribute is an ICU.

In an implementation manner in which step 208a is not included but step 208b and step 208c are included, bandwidth requirements of UEs whose user attributes are a CEU and a PPU may be well protected.

That is to say, in this embodiment, when a resource is allocated for a UE on the frequency band that accords with a result of the determining, and if the resource fails to be allocated for the UE on the frequency band that accords with the result of the determining or an RB allocated for the UE does not meet a requirement of an expected RB, the resource is allocated for the UE on another frequency band.

In addition to the advantages described in the embodiment shown in FIG. 2, in this embodiment of the present invention, on the basis of an existing uplink ICIC technology, a user attribute is further determined according to an absolute value of RSRP measured and reported by a UE, and users are classified into four types, where in addition to a CCU and a CEU, users are further classified as an ICU and a PPU. The user attribute is determined according to the absolute value of the RSRP. In this way, information about a user can be determined more accurately, and a good basis is provided for subsequent ICIC-based resource allocation. In addition, in this embodiment of the present invention, a method for resource allocation based on prediction of an expected RB is proposed. According to the method for resource allocation based on prediction of an expected RB, a CEU and a PPU are set to important users, and their bandwidth requirements are protected, that is to say, it can be determined, through prediction of an expected RB, whether resource allocation for a currently scheduled CCU or ICU causes suppression of requirements of the CEU and the PPU on a frequency band; if the requirements of the CEU and the PPU on a frequency band are suppressed, a resource is not allowed to be allocated for a current user on an edge frequency band; and on the contrary, the resource is allowed to be allocated for the current user on the edge frequency band. In this way, performance of the CEU and the PPU is well ensured; and meanwhile, when the requirements of the CEU and the PPU on a frequency band are relatively low, a resources is allowed to be allocated for a user on an edge frequency band, so that an average throughput of a cell is not affected.

Persons of ordinary skill in the art may understand that all or a part of the steps of the foregoing method embodiments may be implemented by a program instructing relevant hardware. The foregoing program may be stored in a computer readable storage medium. When the program is run, the steps of the foregoing method embodiments are performed. The foregoing storage medium may be any medium that is capable of storing program codes, such as a ROM, a RAM, a magnetic disk, or an optical disk.

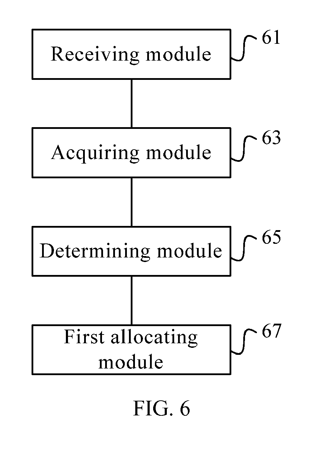

FIG. 6 is a schematic diagram of an apparatus for resource allocation according to an embodiment of the present invention. As shown in FIG. 6, the apparatus includes: a receiving module 61, an acquiring module 63, a determining module 65, and a first allocating module 67.

The receiving module 61 is configured to receive a measurement report sent by a UE.

The acquiring module 63 is configured to acquire RSRP1 and RSRP2 from the measurement report received by the receiving module 61, where the RSRP1 is RSRP from the UE to a serving cell and the RSRP2 is RSRP from the UE to a neighboring cell.

The determining module 65 is configured to determine, according to an absolute value of the RSRP1, an absolute value of the RSRP2, and a difference between values of the RSRP1 and the RSRP2, a frequency band that is suitable to be used by the UE, where the absolute value of the RSRP1, the absolute value of the RSRP2, and the difference between the values of the RSRP1 and the RSRP2 are acquired by the acquiring module 63, and the frequency band includes: a central frequency band and an edge frequency band.

The first allocating module 67 is configured to allocate, according to a result determined by the determining module 65, a resource for the UE on the frequency band that accords with the result of the determining.

The apparatus for resource allocation provided in this embodiment is included in the foregoing network side device and configured to implement the method embodiment shown in FIG. 1. For a working procedure and a working principle of each module in this embodiment, reference is made to the descriptions in the foregoing method embodiment shown in FIG. 1, which are not described herein again.

In this embodiment of the present invention, the apparatus for resource allocation determines, not only according to a difference between values of RSRP1 and RSRP2 but also according to an absolute value of the RSRP1 and an absolute value of the RSRP2, a frequency band that is suitable to be used by a UE, and allocates a resource for the UE on the suitable frequency band, so that coverage performance of a cell can be improved.

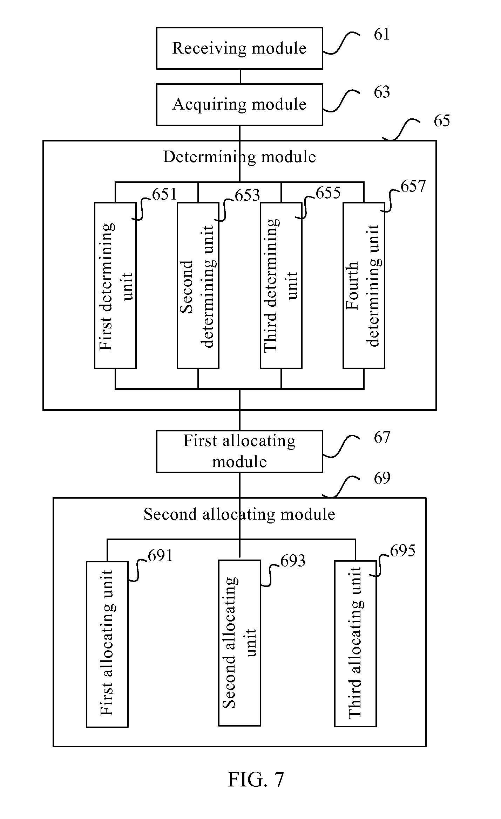

FIG. 7 is a schematic diagram of an apparatus for resource allocation according to another embodiment of the present invention. As shown in FIG. 7, on the basis of the embodiment shown in FIG. 6:
the determining module 65 includes any one or more of the following units: a first determining unit 651, a second determining unit 653, a third determining unit 655, and a fourth determining unit 657.

The first determining unit 651 is configured to, if | RSRP1 - RSRP2 | ≤ T3, RSRP1 > T1, and RSRP2 < T2, determine that a user attribute of the UE is a cell edge user and the frequency band that is suitable to be used by the UE is an edge frequency band, where T1 is a first preset threshold, T2 is a second preset threshold, and T3 is a third preset threshold.

The second determining unit 653 is configured to, if |RSRP1 - RSRP2 | > T3, RSRP1 > T1, and RSRP2 < T2, determine that a user attribute of the UE is a cell center user and the frequency band that is suitable to be used by the UE is a central frequency band, where the central frequency band includes a first sub frequency band and a second sub frequency band.

The third determining unit 655 is configured to, if RSRP1 ≤ T1, determine that a user attribute of the UE is a poor performance user and the frequency band that is suitable to be used by the UE is an edge frequency band.

The fourth determining unit 657 is configured to, if RSRP2 ≥ T2, determine that a user attribute of the UE is an interference causing user and the frequency band that is suitable to be used by the UE is a strong-interference frequency band of the UE. If an edge frequency band of a neighboring cell of the UE is the first sub frequency band of the central frequency band, the second sub frequency band is a strong-interference frequency band of the UE; and if an edge frequency band of a neighboring cell of the UE is the second sub frequency band of the central frequency band, the first sub frequency band is a strong-interference frequency band of the UE.

Further, the apparatus for resource allocation may further include: a second allocating module 69.

The second allocating module 69 is configured to, when the resource is allocated for the UE on the frequency band that accords with the result of the determining, and if the resource fails to be allocated for the UE on the frequency band that accords with the result of the determining or a resource block allocated for the UE does not meet a requirement of an expected resource block, allocate the resource for the UE on another frequency band.

Specifically, the second allocating module 69 may include any one or more of the following units: a first allocating unit 691, a second allocating unit 693, and a third allocating unit 695.

The first allocating unit 691 is configured to, if a resource fails to be allocated on the edge frequency band for a UE whose user attribute is a cell edge user or a poor performance user or a resource block allocated for the UE does not meet a requirement of an expected resource block, allocate the resource on the central frequency band for the UE whose user attribute is a cell edge user or a poor performance user.

The second allocating unit 693 is configured to, if a resource fails to be allocated on the central frequency band for a UE whose user attribute is a cell center user or a resource block allocated for the UE does not meet a requirement of an expected resource block, allocate the resource on the edge frequency band for the UE whose user attribute is a cell center user.

The third allocating unit 695 is configured to, if a resource fails to be allocated on the strong-interference frequency band for a UE whose user attribute is an interference causing user or a resource block allocated for the UE does not meet a requirement of an expected resource block, allocate the resource on the edge frequency band for the UE whose user attribute is an interference causing user.

Further, the first allocating unit 691 may be specifically configured to: if the resource fails to be allocated on the edge frequency band for the UE whose user attribute is a cell edge user or a poor performance user or the resource block allocated for the UE does not meet the requirement of the expected resource block, and if it is predicted that a sum of expected RBs of the UE that is among M1 users to be scheduled at a current transmission time interval and whose user attribute is a cell center user is less than a fourth threshold, allocate the resource on the central frequency band for the UE whose user attribute is a cell edge user or a poor performance user.

The second allocating unit 693 may be specifically configured to: if the resource fails to be allocated on the central frequency band for the UE whose user attribute is a cell center user or the resource block allocated for the UE does not meet the requirement of the expected resource block, and if it is predicted that a sum of expected RBs of the UE that is among M2 users to be scheduled at a current transmission time interval and whose user attribute is a non-cell-center user is less than a fifth threshold, allocate the resource on the edge frequency band for the UE whose user attribute is a cell center user.

The third allocating unit 695 may be specifically configured to: if the resource fails to be allocated on the strong-interference frequency band for the UE whose user attribute is an interference causing user or the resource block allocated for the UE does not meet the requirement of the expected resource block, and if it is predicted that a sum of expected RBs of the UE that is among M3 users to be scheduled at a current transmission time interval and whose user attribute is a non-cell-center user is less than a sixth threshold, allocate the resource on the edge frequency band for the UE whose user attribute is an interference causing user.

The apparatus for resource allocation provided in this embodiment is included in the foregoing network side device and configured to implement the method embodiments shown in FIG. 1 to FIG. 5A and FIG. 5B. For a working procedure and a working principle of each module in this embodiment, reference is made to the descriptions in the foregoing method embodiments shown in FIG. 1 to FIG. 5A and FIG. 5B, which are not described herein again.

In this embodiment of the present invention, the apparatus for resource allocation may classify a user attribute based on a difference between values of RSRP1 and RSRP2 and values of the RSRP1 and the RSRP2; the apparatus for resource allocation may divide a frequency band in a serving cell into a central frequency band and an edge frequency band, and may further divide a strong-interference frequency band from the central frequency band; moreover, the apparatus for resource allocation selects, according to a user attribute of a UE, a suitable frequency band from the central frequency band, the edge frequency band, and the strong-interference frequency band to allocate a resource for the UE, that is, the base station adaptively allocates a resource for the UE according to a newly classified user attribute, so that coverage performance of a cell can be improved. In addition, the apparatus for resource allocation in this embodiment of the present invention may perform resource allocation based on prediction of an expected RB.

An embodiment of the present invention further provides a base station, where the base station includes any one of the apparatuses for resource allocation provided in the embodiments of the present invention.

The base station provided in this embodiment is equivalent to the foregoing network side device and configured to implement the method embodiments shown in FIG. 1 to FIG. 5A and FIG. 5B. For a working procedure and a working principle of the base station in this embodiment, reference is made to the descriptions in the foregoing method embodiments shown in FIG. 1 to FIG. 5A and FIG. 5B, and which are not described herein again.

In this embodiment of the present invention, the base station determines, not only according to a difference between values of RSRP1 and RSRP2 but also according to an absolute value of the RSRP1 and an absolute value of the RSRP2, a frequency band that is suitable to be used by a UE, and allocates a resource for the UE on the suitable frequency band, so that coverage performance of a cell can be improved.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof; however, these modifications or replacements do not make the essence of corresponding technical solutions depart from the scope of the technical solutions in the embodiments of the present invention.

## Claims

1. A method for resource allocation, comprising:
receiving (101, 201), by a network side device, a measurement report sent by a user equipment UE;
acquiring (102), by the network side device, reference signal received power RSRP1 and RSRP2 from the measurement report, wherein the RSRP1 is RSRP from the UE to a serving cell and the RSRP2 is RSRP from the UE to a neighboring cell;
determining (103, 204a-d), by the network side device according to an absolute value of the RSRP1, an absolute value of the RSRP2, and a difference between values of the RSRP1 and the RSRP2, a frequency band that is suitable to be used by the UE, wherein the frequency band comprises one of: a central frequency band and an edge frequency band; and
allocating (104, 205a-c), by the network side device according to a result of the determining, a resource for the UE on the frequency band that accords with the result of the determining,
**characterized in that**
the determining, by the network side device according to an absolute value of the RSRP1, an absolute value of the RSRP2, and a difference between values of the RSRP1 and the RSRP2, a frequency band that is suitable to be used by the UE comprises one or any combination of the following cases:
if | RSRP1 - RSRP2 | ≤ T3, RSRP1 > T1, and RSRP2 < T2, determining (204a) that a user attribute of the UE is a cell edge user and the frequency band that is suitable to be used by the UE is an edge frequency band, wherein T1 is a first preset threshold, T2 is a second preset threshold, and T3 is a third preset threshold;
if |RSRP1 - RSRP2 | > T3, RSRP1 > T1, and RSRP2 < T2, determining (204b) that a user attribute of the UE is a cell center user and the frequency band that is suitable to be used by the UE is a central frequency band, wherein the central frequency band comprises a first sub frequency band and a second sub frequency band;
if RSRP1 ≤ T1, determining (204d) that a user attribute of the UE is a poor performance user and the frequency band that is suitable to be used by the UE is an edge frequency band; and
if RSRP2 ≥ T2, determining (204c) that a user attribute of the UE is an interference causing user and the frequency band that is suitable to be used by the UE is a strong-interference frequency band of the UE, wherein if an edge frequency band of a neighboring cell of the UE is the first sub frequency band of the central frequency band, the second sub frequency band is a strong-interference frequency band of the UE, and if an edge frequency band of a neighboring cell of the UE is the second sub frequency band of the central frequency band, the first sub frequency band is a strong-interference frequency band of the UE.

2. The method according to claim 1, further comprising:
when the resource is allocated for the UE on the frequency band that accords with the result of the determining, and if the resource fails to be allocated for the UE on the frequency band that accords with the result of the determining or a resource block allocated for the UE does not meet a requirement of an expected resource block, allocating (209a-c) the resource for the UE on another frequency band.

3. The method according to claim 2, wherein if the resource fails to be allocated for the UE on the frequency band that accords with the result of the determining or a resource block allocated for the UE does not meet a requirement of an expected resource block, the allocating the resource for the UE on another frequency band comprises one or any combination of the following cases:
if a resource fails to be allocated on the edge frequency band for a UE whose user attribute is a cell edge user or a poor performance user or a resource block allocated for the UE does not meet a requirement of an expected resource block, allocating (209a) the resource on the central frequency band for the UE whose user attribute is a cell edge user or a poor performance user;
if a resource fails to be allocated on the central frequency band for a UE whose user attribute is a cell center user or a resource block allocated for the UE does not meet a requirement of an expected resource block, allocating (209b) the resource on the edge frequency band for the UE whose user attribute is a cell center user; and
if a resource fails to be allocated on the strong-interference frequency band for a UE whose user attribute is an interference causing user or a resource block allocated for the UE does not meet a requirement of an expected resource block, allocating (209c) the resource on the edge frequency band for the UE whose user attribute is an interference causing user.

4. The method for resource allocation according to claim 3, wherein:
the allocating the resource on the central frequency band for the UE whose user attribute is a cell edge user or a poor performance user comprises:
if it is predicted (208a) that a sum of expected RBs of the UE that is among M1 users to be scheduled at a current transmission time interval and whose user attribute is a cell center user is less than a fourth threshold, allocating (209a) the resource on the central frequency band for the UE whose user attribute is a cell edge user or a poor performance user;
the allocating the resource on the edge frequency band for the UE whose user attribute is a cell center user comprises:
if it is predicted (208b) that a sum of expected RBs of the UE that is among M2 users to be scheduled at a current transmission time interval and whose user attribute is a non-cell-center user is less than a fifth threshold, allocating (209b) the resource on the edge frequency band for the UE whose user attribute is a cell center user; and
the allocating the resource on the edge frequency band for the UE whose user attribute is an interference causing user comprises:
if it is predicted (208c) that a sum of expected RBs of the UE that is among M3 users to be scheduled at a current transmission time interval and whose user attribute is a non-cell-center user is less than a sixth threshold, allocating (209c) the resource on the edge frequency band for the UE whose user attribute is an interference causing user.

5. An apparatus for resource allocation, comprising:
a receiving module (61), configured to receive a measurement report sent by a user equipment UE;
an acquiring module (63), configured to acquire reference signal received power RSRP1 and RSRP2 from the measurement report received by the receiving module, wherein the RSRP1 is RSRP from the UE to a serving cell and the RSRP2 is RSRP from the UE to a neighboring cell;
a determining module (65), configured to determine, according to an absolute value of the RSRP1, an absolute value of the RSRP2, and a difference between values of the RSRP1 and the RSRP2, a frequency band that is suitable to be used by the UE, wherein the absolute value of the RSRP1, the absolute value of the RSRP2, and the difference between the values of the RSRP1 and the RSRP2 are acquired by the acquiring module, and the frequency band comprises one of: a central frequency band and an edge frequency band; and
a first allocating module (67), configured to allocate, according to a result determined by the determining module, a resource for the UE on the frequency band that accords with the result of the determining,
**characterized in that**
the determining module comprises any one or more of the following units:
a first determining unit (651), configured to, if | RSRP1 - RSRP2 | ≤ T3, RSRP1 > T1, and RSRP2 < T2, determine that a user attribute of the UE is a cell edge user and the frequency band that is suitable to be used by the UE is an edge frequency band, wherein T1 is a first preset threshold, T2 is a second preset threshold, and T3 is a third preset threshold;
a second determining unit (653), configured to, if | RSRP1 - RSRP2 | > T3, RSRP1 > T1, and RSRP2 < T2, determine that a user attribute of the UE is a cell center user and the frequency band that is suitable to be used by the UE is a central frequency band, wherein the central frequency band comprises a first sub frequency band and a second sub frequency band;
a third determining unit (655), configured to, if RSRP1 ≤ T1, determine that a user attribute of the UE is a poor performance user and the frequency band that is suitable to be used by the UE is an edge frequency band; and
a fourth determining unit (657), configured to, if RSRP2 ≥ T2, determine that a user attribute of the UE is an interference causing user and the frequency band that is suitable to be used by the UE is a strong-interference frequency band of the UE, wherein if an edge frequency band of a neighboring cell of the UE is the first sub frequency band of the central frequency band, the second sub frequency band is a strong-interference frequency band of the UE, and if an edge frequency band of a neighboring cell of the UE is the second sub frequency band of the central frequency band, the first sub frequency band is a strong-interference frequency band of the UE.

6. The apparatus according to claim 5, further comprising:
a second allocating module (69), configured to, when the resource is allocated for the UE on the frequency band that accords with the result of the determining, and if the resource fails to be allocated for the UE on the frequency band that accords with the result of the determining or a resource block allocated for the UE does not meet a requirement of an expected resource block, allocate the resource for the UE on another frequency band.

7. The apparatus according to claim 6, wherein the second allocating module comprises any one or more of the following units:
a first allocating unit (691), configured to, if a resource fails to be allocated on the edge frequency band for a UE whose user attribute is a cell edge user or a poor performance user or a resource block allocated for the UE does not meet a requirement of an expected resource block, allocate the resource on the central frequency band for the UE whose user attribute is a cell edge user or a poor performance user;
a second allocating unit (693), configured to, if a resource fails to be allocated on the central frequency band for a UE whose user attribute is a cell center user or a resource block allocated for the UE does not meet a requirement of an expected resource block, allocate the resource on the edge frequency band for the UE whose user attribute is a cell center user; and
a third allocating unit (695), configured to, if a resource fails to be allocated on the strong-interference frequency band for a UE whose user attribute is an interference causing user or a resource block allocated for the UE does not meet a requirement of an expected resource block, allocate the resource on the edge frequency band for the UE whose user attribute is an interference causing user.

8. The apparatus according to claim 7, wherein:
the first allocating unit (691) is specifically configured to: if the resource fails to be allocated on the edge frequency band for the UE whose user attribute is a cell edge user or a poor performance user or the resource block allocated for the UE does not meet the requirement of the expected resource block, and if it is predicted that a sum of expected RBs of the UE that is among M1 users to be scheduled at a current transmission time interval and whose user attribute is a cell center user is less than a fourth threshold, allocate the resource on the central frequency band for the UE whose user attribute is a cell edge user or a poor performance user;
the second allocating unit (693) is specifically configured to: if the resource fails to be allocated on the central frequency band for the UE whose user attribute is a cell center user or the resource block allocated for the UE does not meet the requirement of the expected resource block, and if it is predicted that a sum of expected RBs of the UE that is among M2 users to be scheduled at a current transmission time interval and whose user attribute is a non-cell-center user is less than a fifth threshold, allocate the resource on the edge frequency band for the UE whose user attribute is a cell center user; and
the third allocating unit (695) is specifically configured to: if the resource fails to be allocated on the strong-interference frequency band for the UE whose user attribute is an interference causing user or the resource block allocated for the UE does not meet the requirement of the expected resource block, and if it is predicted that a sum of expected RBs of the UE that is among M3 users to be scheduled at a current transmission time interval and whose user attribute is a non-cell-center user is less than a sixth threshold, allocate the resource on the edge frequency band for the UE whose user attribute is an interference causing user.

9. A base station, comprising the apparatus for resource allocation according to any one of claims 5-8.

## Patentansprüche

1. Verfahren zur Ressourcenzuweisung, das die folgenden Schritte aufweist:
Empfangen (101, 201) durch eine netzwerkseitige Vorrichtung eines Messwertberichts, der durch ein Benutzergerät (user equipment, UE) gesendet wird;
Erfassen (102) durch die netzwerkseitige Vorrichtung von Referenzsignal-Empfangsleistungen (reference signal received power, RSRP) RSRP1 und RSRP2 aus dem Messwertbericht, wobei die RSRP1 die RSRP vom UE zu einer bedienenden Zelle ist und die RSRP2 die RSRP vom UE zu einer benachbarten Zelle ist;
Feststellen (103, 204a-d) eines Frequenzbands, das dazu geeignet ist, durch das UE verwendet zu werden, durch die netzwerkseitige Vorrichtung gemäß einem Absolutwert der RSRP1, einem Absolutwert der RSRP2 und einer Differenz zwischen den Werten der RSRP1 und der RSRP2, wobei das Frequenzband ein mittleres Frequenzband oder ein Randfrequenzband aufweist; und
Zuweisen (104, 205a-c) durch die netzwerkseitige Vorrichtung gemäß einem Resultat der Feststellung einer Ressource für das UE auf dem Frequenzband, das dem Resultat der Feststellung entspricht,
**dadurch gekennzeichnet, dass**
das Feststellen eines Frequenzbands, das dazu geeignet ist, durch das UE verwendet zu werden, durch die netzwerkseitige Vorrichtung gemäß einem Absolutwert der RSRP1, einem Absolutwert der RSRP2 und einer Differenz zwischen den Werten der RSRP1 und der RSRP2 einen oder irgendeine Kombination der folgenden Fälle aufweist:
wenn |RSRP1 - RSRP2| ≤ T3, RSRP1 > T1 und RSRP2 < T2, Feststellen (204a), dass ein Benutzerattribut des UE ein Zellenrandbenutzer ist und das Frequenzband, das dazu geeignet ist, durch das UE verwendet zu werden, ein Randfrequenzband ist,
wobei T1 ein erster voreingestellter Schwellenwert ist, T2 ein zweiter voreingestellter Schwellenwert ist und T3 ein dritter voreingestellter Schwellenwert ist;
wenn |RSRP1 - RSRP2| > T3, RSRP1 > T1 und RSRP2 < T2, Feststellen (204b), dass ein Benutzerattribut des UE ein Zellenmittenbenutzer ist und das Frequenzband, das dazu geeignet ist, durch das UE verwendet zu werden, ein mittleres Frequenzband ist, wobei das mittlere Frequenzband ein erstes Teilfrequenzband und ein zweites Teilfrequenzband aufweist;
wenn RSRP1 ≤ T1, Feststellen (204d), dass ein Benutzerattribut des UE ein Benutzer mit schlechter Leistung ist und das Frequenzband, das dazu geeignet ist, durch das UE verwendet zu werden, ein Randfrequenzband ist; und
wenn RSRP2 ≥ T2, Feststellen (204c), dass ein Benutzerattribut des UE ein interferenzverursachender Benutzer ist und das Frequenzband, das dazu geeignet ist, durch das UE verwendet zu werden, ein Starkinterferenz-Frequenzband des UE ist, wobei,
wenn ein Randfrequenzband einer benachbarten Zelle des UE das erste Teilfrequenzband des mittleren Frequenzbands ist, das zweite Teilfrequenzband ein Starkinterferenz-Frequenzband des UE ist und wenn ein Randfrequenzband einer benachbarten Zelle des UE das zweite Teilfrequenzband des mittleren Frequenzbands ist, das erste Teilfrequenzband ein Starkinterferenz-Frequenzband des UE ist.

2. Verfahren nach Anspruch 1, das ferner aufweist:
wenn die Ressource für das UE auf dem Frequenzband zugewiesen wird, das dem Resultat der Feststellung entspricht, und wenn die Ressource für das UE auf dem Frequenzband nicht zugewiesen wird, das dem Resultat der Feststellung entspricht,
oder ein für das UE zugewiesener Ressourcenblock eine Anforderung eines erwarteten Ressourcenblocks nicht erfüllt, Zuweisen (209a-c) der Ressource für das UE auf einem anderen Frequenzband.

3. Verfahren nach Anspruch 2, wobei, wenn die Ressource für das UE auf dem Frequenzband nicht zugewiesen wird, das dem Resultat der Feststellung entspricht, oder ein für das UE zugewiesener Ressourcenblock eine Anforderung eines erwarteten Ressourcenblocks nicht erfüllt, das Zuweisen der Ressource für das UE auf einem anderen Frequenzband eine oder irgendeine Kombination der folgenden Fälle aufweist:
wenn eine Ressource nicht auf dem Randfrequenzband für ein UE zugewiesen wird, dessen Benutzerattribut ein Zellenrandbenutzer oder ein Benutzer mit schlechter Leistung ist, oder ein für das UE zugewiesener Ressourcenblock eine Anforderung eines erwarteten Ressourcenblocks nicht erfüllt, Zuweisen (209a) der Ressource auf dem mittleren Frequenzband für das UE, dessen Benutzerattribut ein Zellenrandbenutzer oder ein Benutzer mit schlechter Leistung ist;
wenn eine Ressource nicht auf dem mittleren Frequenzband für ein UE zugewiesen wird, dessen Benutzerattribut ein Zellenmittenbenutzer ist, oder ein für das UE zugewiesener Ressourcenblock eine Anforderung eines erwarteten Ressourcenblocks nicht erfüllt, Zuweisen (209b) der Ressource auf dem Randfrequenzband für das UE, dessen Benutzerattribut ein Zellenmittenbenutzer ist; und
wenn eine Ressource nicht auf dem Starkinterferenz-Frequenzband für ein UE zugewiesen wird, dessen Benutzerattribut ein interferenzverursachender Benutzer ist, oder ein für das UE zugewiesener Ressourcenblock eine Anforderung eines erwarteten Ressourcenblocks nicht erfüllt, Zuweisen (209c) der Ressource auf dem Randfrequenzband für das UE, dessen Benutzerattribut ein interferenzverursachender Benutzer ist.

4. Verfahren zur Ressourcenzuweisung nach Anspruch 3, wobei:
das Zuweisen der Ressource auf dem mittleren Frequenzband für das UE, dessen Benutzerattribut ein Zellenrandbenutzer oder ein Benutzer mit schlechter Leistung ist, aufweist:
wenn vorhergesagt wird (208a), dass eine Summe von erwarteten RBs des UE, das sich unter M1 Benutzern befindet, die in einem gegenwärtigen Übertragungszeitintervall eingeplant werden sollen, und dessen Benutzerattribut ein Zellenmittenbenutzer ist, kleiner als ein vierter Schwellenwert ist, Zuweisen (209a) der Ressource auf dem mittleren Frequenzband für das UE, dessen Benutzerattribut ein Zellenrandbenutzer oder ein Benutzer mit schlechter Leistung ist;
das Zuweisen der Ressource auf dem Randfrequenzband für das UE, dessen Benutzerattribut ein Zellenmittenbenutzer ist, aufweist:
wenn vorhergesagt wird (208b), dass eine Summe von erwarteten RBs des UE, das sich unter M2 Benutzern befindet, die in einem gegenwärtigen Übertragungszeitintervall eingeplant werden sollen, und dessen Benutzerattribut ein Nicht-Zellenmittenbenutzer ist, kleiner als ein fünfter Schwellenwert ist, Zuweisen (209b) der Ressource auf dem Randfrequenzband für das UE, dessen Benutzerattribut ein Zellenmittenbenutzer ist; und
das Zuweisen der Ressource auf dem Randfrequenzband für das UE, dessen Benutzerattribut ein interferenzverursachender Benutzer ist, aufweist:
wenn vorhergesagt wird (208c), dass eine Summe von erwarteten RBs des UE, das sich unter M3 Benutzern befindet, die in einem gegenwärtigen Übertragungszeitintervall eingeplant werden sollen, und dessen Benutzerattribut ein Nicht-Zellenmittenbenutzer ist, kleiner als ein sechster Schwellenwert ist, Zuweisen (209c) der Ressource auf dem Randfrequenzband für das UE, dessen Benutzerattribut ein interferenzverursachender Benutzer ist.

5. Vorrichtung zur Ressourcenzuweisung, die Folgendes aufweist:
ein Empfangsmodul (61), das konfiguriert ist, einen Messwertbericht zu empfangen, der durch ein Benutzergerät, UE, gesendet wird;
ein Erfassungsmodul (63), das konfiguriert ist, Referenzsignal-Empfangsleistungen RSRP1 und RSRP2 aus dem Messwertbericht zu erfassen, der durch das Empfangsmodul empfangen wird, wobei die RSRP1 die RSRP vom UE zu einer bedienenden Zelle und die RSRP2 die RSRP vom UE zu einer benachbarten Zelle ist;
ein Feststellungsmodul (65), das konfiguriert ist, gemäß einem Absolutwert der RSRP1, einem Absolutwert der RSRP2 und einer Differenz zwischen den Werten der RSRP1 und der RSRP2 ein Frequenzband festzustellen, das dazu geeignet ist, durch das UE verwendet zu werden, wobei der Absolutwert der RSRP1, der Absolutwert der RSRP2 und die Differenz zwischen den Werten der RSRP1 und der RSRP2 durch das Erfassungsmodul erfasst werden und das Frequenzband ein mittleres Frequenzband oder ein Randfrequenzband aufweist; und
ein erstes Zuweisungsmodul (67), das konfiguriert ist, gemäß einem durch das Feststellungsmodul festgestellten Resultat eine Ressource für das UE auf dem Frequenzband zuzuweisen, das dem Resultat der Feststellung entspricht,
**dadurch gekennzeichnet, dass**
das Feststellungsmodul irgendeine oder mehrere der folgenden Einheiten aufweist:
eine erste Feststellungseinheit (651), die konfiguriert ist, wenn |RSRP1 - RSRP2| ≤ T3, RSRP1 > T1 und RSRP2 < T2, festzustellen, dass ein Benutzerattribut des UE ein Zellenrandbenutzer ist und das Frequenzband, das dazu geeignet ist, durch das UE verwendet zu werden, ein Randfrequenzband ist, wobei T1 ein erster voreingestellter Schwellenwert ist, T2 ein zweiter voreingestellter Schwellenwert ist und T3 ein dritter voreingestellter Schwellenwert ist;
eine zweite Feststellungseinheit (653), die konfiguriert ist, wenn |RSRP1 - RSRP2| > T3, RSRP1 > T1 und RSRP2 < T2, festzustellen, dass ein Benutzerattribut des UE ein Zellenmittenbenutzer ist und das Frequenzband, das dazu geeignet ist, durch das UE verwendet zu werden, ein mittleres Frequenzband ist, wobei das mittlere Frequenzband ein erstes Teilfrequenzband und ein zweites Teilfrequenzband aufweist;
eine dritte Feststellungseinheit (655), die konfiguriert ist, wenn RSRP1 ≤ T1, festzustellen, dass ein Benutzerattribut des UE ein Benutzer mit schlechter Leistung ist und das Frequenzband, das dazu geeignet ist, durch das UE verwendet zu werden, ein Randfrequenzband ist; und
eine vierte Feststellungseinheit (657), die konfiguriert ist, wenn RSRP2 ≥ T2, festzustellen, dass ein Benutzerattribut des UE ein interferenzverursachender Benutzer ist und das Frequenzband, das dazu geeignet ist, durch das UE verwendet zu werden, ein Starkinterferenz-Frequenzband des UE ist, wobei, wenn ein Randfrequenzband einer benachbarten Zelle des UE das erste Teilfrequenzband des mittleren Frequenzbands ist, das zweite Teilfrequenzband ein Starkinterferenz-Frequenzband des UE ist, und
wenn ein Randfrequenzband einer benachbarten Zelle des UE das zweite Teilfrequenzband des mittleren Frequenzbands ist, das erste Teilfrequenzband ein Starkinterferenz-Frequenzband des UE ist.

6. Vorrichtung nach Anspruch 5, die ferner aufweist:
ein zweites Zuweisungsmodul (69), das konfiguriert ist, wenn die Ressource für das UE auf dem Frequenzband zugewiesen wird, das dem Resultat der Feststellung entspricht, und wenn die Ressource für das UE auf dem Frequenzband nicht zugewiesen wird, das dem Resultat der Feststellung entspricht, oder ein für das UE zugewiesener Ressourcenblock eine Anforderung eines erwarteten Ressourcenblocks nicht erfüllt, die Ressource für das UE auf einem anderen Frequenzband zuzuweisen.

7. Vorrichtung nach Anspruch 6, wobei das zweite Zuweisungsmodul irgendeine oder mehrere der folgenden Einheiten aufweist:
eine erste Zuweisungseinheit (691), die konfiguriert ist, wenn eine Ressource nicht auf dem Randfrequenzband für ein UE zugewiesen wird, dessen Benutzerattribut ein Zellenrandbenutzer oder ein Benutzer mit schlechter Leistung ist, oder ein für das UE zugewiesener Ressourcenblock eine Anforderung eines erwarteten Ressourcenblocks nicht erfüllt, die Ressource auf dem mittleren Frequenzband für das UE zuzuweisen,
dessen Benutzerattribut ein Zellenrandbenutzer oder ein Benutzer mit schlechter Leistung ist;
eine zweite Zuweisungseinheit (693), die konfiguriert ist, wenn eine Ressource nicht auf dem mittleren Frequenzband für ein UE zugewiesen wird, dessen Benutzerattribut ein Zellenmittenbenutzer ist, oder ein für das UE zugewiesener Ressourcenblock eine Anforderung eines erwarteten Ressourcenblocks nicht erfüllt, die Ressource auf dem Randfrequenzband für das UE zuzuweisen, dessen Benutzerattribut ein Zellenmittenbenutzer ist; und
eine dritte Zuweisungseinheit (695), die konfiguriert ist, wenn eine Ressource nicht auf dem Starkinterferenz-Frequenzband für ein UE zugewiesen wird, dessen Benutzerattribut ein interferenzverursachender Benutzer ist, oder ein für das UE zugewiesener Ressourcenblock eine Anforderung eines erwarteten Ressourcenblocks nicht erfüllt, die Ressource auf dem Randfrequenzband für das UE zuzuweisen, dessen Benutzerattribut ein interferenzverursachender Benutzer ist.

8. Vorrichtung nach Anspruch 7, wobei:
die erste Zuweisungseinheit (691) insbesondere konfiguriert ist, wenn die Ressource nicht auf dem Randfrequenzband für das UE zugewiesen wird, dessen Benutzerattribut ein Zellenrandbenutzer oder ein Benutzer mit schlechter Leistung ist, oder der für das UE zugewiesene Ressourcenblock die Anforderung des erwarteten Ressourcenblocks nicht erfüllt, und wenn vorhergesagt wird, dass eine Summe von erwarteten RBs des UE, das sich unter M1 Benutzern befindet, die in einem gegenwärtigen Übertragungszeitintervall eingeplant werden sollen, und dessen Benutzerattribut ein Zellenmittenbenutzer ist, kleiner als ein vierter Schwellenwert ist, die Ressource auf dem mittleren Frequenzband für das UE zuzuweisen, dessen Benutzerattribut ein Zellenrandbenutzer oder ein Benutzer mit schlechter Leistung ist;
die zweite Zuweisungseinheit (693) insbesondere konfiguriert ist, wenn die Ressource nicht auf dem mittleren Frequenzband für das UE zugewiesen wird, dessen Benutzerattribut ein Zellenmittenbenutzer ist, oder der für das UE zugewiesene Ressourcenblock die Anforderung des erwarteten Ressourcenblocks nicht erfüllt, und wenn vorhergesagt wird, dass eine Summe von erwarteten RBs des UE, das sich unter M2 Benutzern befindet, die in einem gegenwärtigen Übertragungszeitintervall eingeplant werden sollen, und dessen Benutzerattribut ein Nicht-Zellenmittenbenutzer ist, kleiner als ein fünfter Schwellenwert ist, die Ressource auf dem Randfrequenzband für das UE zuzuweisen, dessen Benutzerattribut ein Zellenmittenbenutzer ist; und
die dritte Zuweisungseinheit (695) insbesondere konfiguriert ist, wenn die Ressource nicht auf dem Starkinterferenz-Frequenzband für das UE zugewiesen wird, dessen Benutzerattribut ein interferenzverursachender Benutzer ist, oder der für das UE zugewiesene Ressourcenblock die Anforderung des erwarteten Ressourcenblocks nicht erfüllt, und wenn vorhergesagt wird, dass eine Summe von erwarteten RBs des UE,
das sich unter M3 Benutzern befindet, die in einem gegenwärtigen Übertragungszeitintervall eingeplant werden sollen, und dessen Benutzerattribut ein Nicht-Zellenmittenbenutzer ist, kleiner als ein sechster Schwellenwert ist, die Ressource auf dem Randfrequenzband für das UE zuzuweisen, dessen Benutzerattribut ein interferenzverursachender Benutzer ist.

9. Basisstation, die die Vorrichtung zur Ressourcenzuweisung nach einem der Ansprüche 5 bis 8 aufweist.

## Revendications

1. Procédé d'allocation de ressources, comprenant les étapes suivantes :
recevoir (101, 201), par un dispositif côté réseau, un rapport de mesure envoyé par un équipement d'utilisateur UE ;
acquérir (102), par le dispositif côté réseau, une puissance reçue de signal de référence RSRP1 et RSRP2 du rapport de mesure, où la RSRP1 est la RSRP de l'équipement UE à une cellule de desserte et la RSRP2 est la RSRP de l'équipement UE à une cellule voisine ;
déterminer (103, 204a-d), par le dispositif côté réseau, en fonction d'une valeur absolue de la RSRP1, d'une valeur absolue de la RSRP2, et d'une différence entre les valeurs de la RSRP1 et de la RSRP2, une bande de fréquences qui est adaptée pour être utilisée par l'équipement UE, où la bande de fréquences comprend une bande parmi : une bande de fréquences centrale et une bande de fréquences périphérique ; et
allouer (104, 205a-c), par le dispositif côté réseau, en fonction d'un résultat de la détermination, une ressource pour l'équipement UE sur la bande de fréquences qui concorde avec le résultat de la détermination,
**caractérisé en ce que**
la détermination, par le dispositif côté réseau, en fonction d'une valeur absolue de la RSRP1, d'une valeur absolue de la RSRP2, et d'une différence entre les valeurs de la RSRP1 et de la RSRP2, d'une bande de fréquences qui est adaptée pour être utilisée par l'équipement UE comprend un, ou une combinaison quelconque, des cas suivants :
si | RSRP1 - RSRP2 | ≤ T3, RSRP1 > T1, et RSRP2 < T2, déterminer (204a) qu'un attribut d'utilisateur de l'équipement UE est un utilisateur de bord de cellule et que la bande de fréquences qui est adaptée pour être utilisée par l'équipement UE est une bande de fréquences périphérique, où T1 est un premier seuil prédéterminé, T2 est un deuxième seuil prédéterminé, et T3 est un troisième seuil prédéterminé ;
si | RSRP1 - RSRP2 |> T3, RSRP1 > T1, et RSRP2 < T2, déterminer (204b) qu'un attribut d'utilisateur de l'équipement UE est un utilisateur de centre de cellule et que la bande de fréquences qui est adaptée pour être utilisée par l'équipement UE est une bande de fréquences centrale, où la bande de fréquences centrale comprend une première bande de sous-fréquences et une seconde bande de sous-fréquences ;
si RSRP1 ≤ T1, déterminer (204d) qu'un attribut d'utilisateur de l'équipement UE est un utilisateur à faibles performances et que la bande de fréquences qui est adaptée pour être utilisée par l'équipement UE est une bande de fréquences périphérique ; et si RSRP2 ≥ T2, déterminer (204c) qu'un attribut d'utilisateur de l'équipement UE est un utilisateur provoquant des interférences et que la bande de fréquences qui est adaptée pour être utilisée par l'équipement UE est une bande de fréquences à fortes interférences de l'équipement UE, où, si une bande de fréquences périphérique d'une cellule voisine de l'équipement UE est la première bande de sous-fréquences de la bande de fréquences centrale, la seconde bande de sous-fréquences est une bande de fréquences à fortes interférences de l'équipement UE, et si une bande de fréquences périphérique d'une cellule voisine de l'équipement UE est la seconde bande de sous-fréquences de la bande de fréquences centrale, la première bande de sous-fréquences est une bande de fréquences à fortes interférences de l'équipement UE.

2. Procédé selon la revendication 1, comprenant en outre l'étape suivante :
lorsque la ressource est allouée pour l'équipement UE sur la bande de fréquences qui concorde avec le résultat de la détermination, et si la ressource ne parvient pas à être allouée pour l'équipement UE sur la bande de fréquences qui concorde avec le résultat de la détermination ou un bloc de ressources alloué pour l'équipement UE ne satisfait pas à une exigence d'un bloc de ressources attendu, allouer (209a-c) la ressource pour l'équipement UE sur une autre bande de fréquences.

3. Procédé selon la revendication 2, dans lequel, si la ressource ne parvient pas à être allouée pour l'équipement UE sur la bande de fréquences qui concorde avec le résultat de la détermination ou un bloc de ressources alloué pour l'équipement UE ne satisfait pas à une exigence d'un bloc de ressources attendu, l'allocation de la ressource pour l'équipement UE sur une autre bande de fréquences comprend un, ou une combinaison quelconque, des cas suivants :
si une ressource ne parvient pas à être allouée sur la bande de fréquences périphérique pour un équipement UE dont l'attribut d'utilisateur est un utilisateur de bord de cellule ou un utilisateur à faibles performances, ou un bloc de ressources alloué pour l'équipement UE ne satisfait pas à une exigence d'un bloc de ressources attendu, allouer (209a) la ressource sur la bande de fréquences centrale pour l'équipement UE dont l'attribut d'utilisateur est un utilisateur de bord de cellule ou un utilisateur à faibles performances ;
si une ressource ne parvient pas à être allouée sur la bande de fréquences centrale pour un équipement UE dont l'attribut d'utilisateur est un utilisateur de centre de cellule ou un bloc de ressources alloué pour l'équipement UE ne satisfait pas à une exigence d'un bloc de ressources attendu, allouer (209b) la ressource sur la bande de fréquences périphérique pour l'équipement UE dont l'attribut d'utilisateur est un utilisateur de centre de cellule ; et
si une ressource ne parvient pas à être allouée sur la bande de fréquences à fortes interférences pour un équipement UE dont l'attribut d'utilisateur est un utilisateur provoquant des interférences ou un bloc de ressources alloué pour l'équipement UE ne satisfait pas à une exigence d'un bloc de ressources attendu, allouer (209c) la ressource sur la bande de fréquences périphérique pour l'équipement UE dont l'attribut d'utilisateur est un utilisateur provoquant des interférences.

4. Procédé d'allocation de ressources selon la revendication 3, dans lequel :
l'allocation de la ressource sur la bande de fréquence centrale pour l'équipement UE dont l'attribut d'utilisateur est un utilisateur de bord de cellule ou un utilisateur à faibles performances comprend l'étape suivante :
s'il est prédit (208a) qu'une somme de RB attendus de l'équipement UE qui est parmi M1 utilisateurs devant être programmés à un intervalle de temps de transmission courant et dont l'attribut d'utilisateur est un utilisateur de centre de cellule est inférieure à un quatrième seuil, allouer (209a) la ressource sur la bande de fréquences centrale pour l'équipement UE dont l'attribut d'utilisateur est un utilisateur de bord de cellule ou un utilisateur à faibles performances ;
l'allocation de la ressource sur la bande de fréquences périphérique pour l'équipement UE dont l'attribut d'utilisateur est un utilisateur de centre de cellule comprend l'étape suivante :
s'il est prédit (208b) qu'une somme de RB attendus de l'équipement UE qui est parmi M2 utilisateurs devant être programmés à un intervalle de temps de transmission courant et dont l'attribut d'utilisateur est un utilisateur non de centre de cellule est inférieure à un cinquième seuil, allouer (209b) la ressource sur la bande de fréquences périphérique pour l'équipement UE dont l'attribut d'utilisateur est un utilisateur de centre de cellule ; et
l'allocation de la ressource sur la bande de fréquences périphérique pour l'équipement UE dont l'attribut d'utilisateur est un utilisateur provoquant des interférences comprend l'étape suivante :
s'il est prédit (208c) qu'une somme de RB attendus de l'équipement UE qui est parmi M3 utilisateurs devant être programmés à un intervalle de temps de transmission courant et dont l'attribut d'utilisateur est un utilisateur non de centre de cellule est inférieure à un sixième seuil, allouer (209c) la ressource sur la bande de fréquences périphérique pour l'équipement UE dont l'attribut d'utilisateur est un utilisateur provoquant des interférences.

5. Appareil pour l'allocation de ressources, comprenant :
un module de réception (61), configuré pour recevoir un rapport de mesure envoyé par un équipement d'utilisateur UE ;
un module d'acquisition (63), configuré pour acquérir une puissance reçue de signal de référence RSRP1 et RSRP2 du rapport de mesure reçu par le module de réception,
où la RSRP1 est la RSRP de l'équipement UE à une cellule de desserte et la RSRP2 est la RSRP de l'équipement UE à une cellule voisine ;
un module de détermination (65), configuré pour déterminer, en fonction d'une valeur absolue de la RSRP1, d'une valeur absolue de la RSRP2, et d'une différence entre les valeurs de la RSRP1 et de la RSRP2, une bande de fréquences qui est adaptée pour être utilisée par l'équipement UE, où la valeur absolue de la RSRP1, la valeur absolue de la RSRP2, et la différence entre les valeurs de la RSRP1 et de la RSRP2 sont acquises par le module d'acquisition, et la bande de fréquences comprend une bande parmi : une bande de fréquences centrale et une bande de fréquences périphérique ; et
un premier module d'allocation (67), configuré pour allouer, en fonction d'un résultat déterminé par le module de détermination, une ressource pour l'équipement UE sur la bande de fréquences qui concorde avec le résultat de la détermination,
**caractérisé en ce que**
le module de détermination comprend l'une quelconque, ou plusieurs, des unités suivantes :
une première unité de détermination (651), configurée, si | RSRP1 - RSRP2 | ≤ T3, RSRP1 > T1, et RSRP2 < T2, pour déterminer qu'un attribut d'utilisateur de l'équipement UE est un utilisateur de bord de cellule et que la bande de fréquences qui est adaptée pour être utilisée par l'équipement UE est une bande de fréquences périphérique, où T1 est un premier seuil prédéterminé, T2 est un deuxième seuil prédéterminé, et T3 est un troisième seuil prédéterminé ;
une deuxième unité de détermination (653), configurée, si | RSRP1 - RSRP2 | > T3, RSRP1 > T1, et RSRP2 < T2, pour déterminer qu'un attribut d'utilisateur de l'équipement UE est un utilisateur de centre de cellule et que la bande de fréquences qui est adaptée pour être utilisée par l'équipement UE est une bande de fréquences centrale, où la bande de fréquences centrale comprend une première bande de sous-fréquences et une seconde bande de sous-fréquences ;
une troisième unité de détermination (655), configurée, si RSRP1 ≤ T1, pour déterminer qu'un attribut d'utilisateur de l'équipement UE est un utilisateur à faibles performances et que la bande de fréquences qui est adaptée pour être utilisée par l'équipement UE est une bande de fréquences périphérique ; et
une quatrième unité de détermination (657), configurée, si RSRP2 ≥ T2, pour déterminer qu'un attribut d'utilisateur de l'équipement UE est un utilisateur provoquant des interférences et que la bande de fréquences qui est adaptée pour être utilisée par l'équipement UE est une bande de fréquences à fortes interférences de l'équipement UE, où, si une bande de fréquences périphérique d'une cellule voisine de l'équipement UE est la première bande de sous-fréquences de la bande de fréquences centrale, la seconde bande de sous-fréquences est une bande de fréquences à fortes interférences de l'équipement UE, et si une bande de fréquences périphérique d'une cellule voisine de l'équipement UE est la seconde bande de sous-fréquences de la bande de fréquences centrale, la première bande de sous-fréquences est une bande de fréquences à fortes interférences de l'équipement UE.

6. Appareil selon la revendication 5, comprenant en outre :
un second module d'allocation (69), configuré, lorsque la ressource est allouée pour l'équipement UE sur la bande de fréquences qui concorde avec le résultat de la détermination, et si la ressource ne parvient pas à être allouée pour l'équipement UE sur la bande de fréquences qui concorde avec le résultat de la détermination ou un bloc de ressources alloué pour l'équipement UE ne satisfait pas à une exigence d'un bloc de ressources attendu, pour allouer la ressource pour l'équipement UE sur une autre bande de fréquences.

7. Appareil selon la revendication 6, dans lequel le second module d'allocation comprend l'une quelconque, ou plusieurs, des unités suivantes :
une première unité d'allocation (691), configurée, si une ressource ne parvient pas à être allouée sur la bande de fréquences périphérique pour un équipement UE dont l'attribut d'utilisateur est un utilisateur de bord de cellule ou un utilisateur à faibles performances, ou un bloc de ressources alloué pour l'équipement UE ne satisfait pas à une exigence d'un bloc de ressources attendu, pour allouer la ressource sur la bande de fréquences centrale pour l'équipement UE dont l'attribut d'utilisateur est un utilisateur de bord de cellule ou un utilisateur à faibles performances ;
une deuxième unité d'allocation (693), configurée, si une ressource ne parvient pas à être allouée sur la bande de fréquences centrale pour un équipement UE dont l'attribut d'utilisateur est un utilisateur de centre de cellule ou un bloc de ressources alloué pour l'équipement UE ne satisfait pas à une exigence d'un bloc de ressources attendu, pour allouer la ressource sur la bande de fréquences périphérique pour l'équipement UE dont l'attribut d'utilisateur est un utilisateur de centre de cellule ; et
une troisième unité d'allocation (695), configurée, si une ressource ne parvient pas à être allouée sur la bande de fréquences à fortes interférences pour un équipement UE dont l'attribut d'utilisateur est un utilisateur provoquant des interférences ou un bloc de ressources alloué pour l'équipement UE ne satisfait pas à une exigence d'un bloc de ressources attendu, pour allouer la ressource sur la bande de fréquences périphérique pour l'équipement UE dont l'attribut d'utilisateur est un utilisateur provoquant des interférences.

8. Appareil selon la revendication 7, dans lequel :
la première unité d'allocation (691) est spécifiquement configurée pour : si la ressource ne parvient pas à être allouée sur la bande de fréquences périphérique pour l'équipement UE dont l'attribut d'utilisateur est un utilisateur de bord de cellule ou un utilisateur à faibles performances, ou un bloc de ressources alloué pour l'équipement UE ne satisfait pas à l'exigence du bloc de ressources attendu, et s'il est prédit qu'une somme de RB attendus de l'équipement UE qui est parmi M1 utilisateurs devant être programmés à un intervalle de temps de transmission courant et dont l'attribut d'utilisateur est un utilisateur de centre de cellule est inférieure à un quatrième seuil, allouer la ressource sur la bande de fréquences centrale pour l'équipement UE dont l'attribut d'utilisateur est un utilisateur de bord de cellule ou un utilisateur à faibles performances ;
la deuxième unité d'allocation (693) est spécifiquement configurée pour : si la ressource ne parvient pas à être allouée sur la bande de fréquences centrale pour l'équipement UE dont l'attribut d'utilisateur est un utilisateur de centre de cellule ou le bloc de ressources alloué pour l'équipement UE ne satisfait pas l'exigence du bloc de ressources attendu, et s'il est prédit qu'une somme de RB attendus de l'équipement UE qui est parmi M2 utilisateurs devant être programmés à un intervalle de temps de transmission courant et dont l'attribut d'utilisateur est un utilisateur non de centre de cellule est inférieure à un cinquième seuil, allouer la ressource sur la bande de fréquences périphérique pour l'équipement UE dont l'attribut d'utilisateur est un utilisateur de centre de cellule ; et
la troisième unité d'allocation (695) est spécifiquement configurée pour : si la ressource ne parvient pas à être allouée sur la bande de fréquences à fortes interférences pour l'équipement UE dont l'attribut d'utilisateur est un utilisateur provoquant des interférences ou le bloc de ressources alloué pour l'équipement UE ne satisfait pas à l'exigence du bloc de ressources attendu, et s'il est prédit qu'une somme de RB attendus de l'équipement UE qui est parmi M3 utilisateurs devant être programmés à un intervalle de temps de transmission courant et dont l'attribut d'utilisateur est un utilisateur non de centre de cellule est inférieure à un sixième seuil, allouer la ressource sur la bande de fréquences périphérique pour l'équipement UE dont l'attribut d'utilisateur est un utilisateur provoquant des interférences.

9. Station de base comprenant l'appareil pour l'allocation de ressources selon l'une quelconque des revendications 5 à 8.
